# EUROPÄISCHE PATENTSCHRIFT

(11) **EP 2 289 388 B1**
(45) Veröffentlichungstag und Bekanntmachung des Hinweises auf die Patenterteilung: **11.03.2020**
(21) Anmeldenummer: 10172921.8
(22) Anmeldetag: 16.08.2010
(51) Int. Cl.: A47L 15/42, A47L 15/48

(54) **Geschirrspülmaschine mit einem Wasserbehälter zur Kondensationstrocknung sowie zugehöriges Füllverfahren**
Dishwasher with a water container for condensation drying and method for filling same
Lave-vaisselle doté d'un réservoir à eau pour le séchage par condensation et procédé de remplissage correspondant

(30) Priorität: 31.08.2009 DE 102009029039
(43) Veröffentlichungstag der Anmeldung: 02.03.2011
(73) Patentinhaber: BSH Hausgeräte GmbH, 81739 München (DE)
(72) Erfinder: Fauth, Michael, 91785 Pleinfeld (DE); Heißler, Heinz, 89407 Dillingen (DE); Reiter, Andreas, 89435 Finningen (DE); Rieger, Roland, 73492 Rainau (DE)

(56) Entgegenhaltungen:
- EP-A1- 0 943 287
- EP-A2- 1 055 389
- WO-A2-01/85003
- DE-A1- 10 053 030
- JP-A- 2003 235 781

## Beschreibung

Die vorliegende Erfindung betrifft eine Geschirrspülmaschine, insbesondere Haushaltsgeschirrspülmaschine, mit einem Spülbehälter zur Aufnahme von Spülgut, mit wenigstens einem Wasserbehälter, der in wärmeleitendem Kontakt mit dem Spülbehälter zur Bereitstellung wenigstens einer Kondensationsfläche des Spülbehälters während wenigstens eines Trocknungsgangs wenigstens eines Spülgangs dient, und mit einer Befüllvorrichtung zum Befüllen des Wasserbehälters mit Wasser.

Aus der Praxis ist eine Geschirrspülmaschine mit einem derartigen Wasserbehälter bekannt. Bei der bekannten Geschirrspülmaschine wird das Spülgut in einem dem Trocknungsgang bzw. Trocknungsvorgang zeitlich vorangehenden Klarspülgang mittels einer aufgeheizten Spülflüssigkeit beaufschlagt und dadurch erwärmt. Während des nachfolgenden Trocknungsgangs verdampft die am Spülgut anhaftende Spülflüssigkeit, so dass das Spülgut trocknet. Der dabei entstehende Wasserdampf kondensiert dann an den Innenseiten des Spülbehälters. Das Kondensieren des Wasserdampfs wird dabei durch eine Kondensationsfläche gefördert, welche durch im Wasserbehälter befindliches Wasser gekühlt wird.

Nachteilig bei der bekannten Geschirrspülmaschine ist jedoch, dass die Trocknungseffizienz den heutigen Ansprüchen nicht mehr gerecht wird.

In der WO 01/85003 A2 ist eine Vorrichtung zum Trocknen von Geschirr in einem Spülraum einer Geschirrspülmaschine beschrieben. Entstehende heiße, feuchte Spülraumluft wird dabei durch Kondensation außerhalb des Spülraums entfeuchtet, das Kondensat gesammelt und die entfeuchtete Spülraumluft in den Spülraum zurückgeführt. Außerhalb des Spülraums ist ein Wärmetauscher vorgesehen, der an der einen Seite einer Wärmetauscherfläche einen Wasserführungsraum und an der anderen Seite der Wärmetauscherfläche einen Luftleitraum für Spülraumluft bildet. Die Wärmetauscherfläche ist derart angeordnet, dass die feuchte Spülraumluft an ihr kondensiert und das Kondensat unter Schwerkraftwirkung in einen Zwischenspeicher abläuft, an den der Wasserführungsraum angeschlossen ist. Nach einem Ausführungsbeispiel ist der Wasserführungsraum mit dem Zwischenspeicher über ein Ventil verbunden. Bei geschlossenem Ventil wird Kaltwasser in den Wasserführungsraum eingelassen. Mittels eines Umwälzgebläses wird heiße, feuchte Spülraumluft aus dem Spülraum durch den Luftleitraum und durch eine Einlassöffnung zurück in den Spülraum im Kreislauf gefördert. An der Wärmetauscherfläche schlägt sich Kondensat nieder und rinnt unter Schwerkraftwirkung durch einen Spalt in den Zwischenspeicher, dessen Ventil zum Spülraum geschlossen ist. Durch die Einlassöffnung tritt somit entfeuchtete Luft in den Spülraum ein und unterstützt die weitere Trocknung des Geschirrs. Im Laufe der Kondensation nimmt die Temperaturdifferenz an der Wärmetauscherfläche zwangsläufig ab. Ist sie für eine weitere wirkungsvolle Kondensation nicht mehr hinreichend, dann wird das Ventil geöffnet und das erwärmte Wasser aus dem Wasserführungsraum wird in den Zwischenspeicher entlassen. Das Ventil zwischen dem Wasserführungsraum und dem Zwischenspeicher wird danach wieder geschlossen und frisches Kaltwasser wird in den Wasserführungsraum eingefüllt, wonach sich die Kondensation fortsetzt.

Aufgabe der vorliegenden Erfindung ist es, eine Geschirrspülmaschine, insbesondere Haushaltsgeschirrspülmaschine, bereitzustellen, bei der die Trocknungseffizienz verbessert ist.

Die Aufgabe wird bei einer Geschirrspülmaschine der eingangs genannten Art dadurch gelöst, dass die Befüllvorrichtung derart ausgebildet ist, dass der Wasserbehälter verteilt über die Zeitdauer des jeweiligen Trocknungsgangs in mehreren Füllphasen mit Wasser befüllbar ist.

Dadurch, dass die Wasserbefüllung des Wasserbehälters über die Zeitdauer des jeweiligen Trocknungsgangs hinweg verteilt erfolgen kann, d.h. der Wasserbehälter mit Teilmengen an Wasser während des jeweiligen Trocknungsgangs neu nachbefüllbar ist, kann eine ausreichende Kühlung der Kondensationsfläche des Spülbehälters über den gesamten Trocknungsvorgang hinweg betrachtet weitgehend sichergestellt werden. Denn der Wasserbehälter kann mit Wasser in mehreren Füllphasen nachbefüllt werden, das eine kältere Temperatur als das schon im Wasserbehälter befindliche, gespeicherte Wasser aufweist. Auf diese Weise kann die Kondensationswirkung des Wasserbehälters an eine Vielzahl von Betriebsparametern der erfindungsgemäßen Geschirrspülmaschine wie z.B. Temperatur des zulaufenden Wassers, Klarspültemperatur, Menge, Art, und/oder Wärmespeicherkapazität, insbesondere Masse des Spülguts, verwendete Materialien und/oder Wandstärken für Spülbehälter und/oder Wasserbehälter, Fassungsvolumen des Wasserbehälters und/oder des Spülbehälters, usw.... in einfacher und zuverlässiger Weise angepasst werden. Damit geht eine verbesserte Trocknungseffizienz einher.

Bei der erfindungsgemäßen Geschirrspülmaschine kann das Spülgut, insbesondere zu spülendes Geschirr, in einen Spülbehälter eingebracht und dort in einem Spülprozess, der auch Spülgang genannt wird, unter Zuhilfenahme von Spülflüssigkeit gereinigt und anschließend getrocknet werden. Der Spülbehälter kann dabei insbesondere aus Blechteilen und/oder aus Kunststoffteilen zusammengesetzt sein, wobei eine Beschickungsöffnung zum Einbringen und Entnehmen von Spülgut durch eine Tür verschließbar ist, so dass der Innenraum des Spülbehälters der auch Spülkammer genannt wird, bei geschlossener Tür im Wesentlichen abgeschlossen ist.

Dabei wird unter einer Spülflüssigkeit, auch Spülflotte genannt, eine Flüssigkeit verstanden, welche dazu vorgesehen ist, auf das Spülgut aufgebracht zu werden, um dieses zu reinigen und/oder in anderer Weise zu behandeln. Eine Spülflüssigkeit besteht in aller Regel zu einem überwiegenden Teil aus Wasser. Dabei kann die Spülflüssigkeit je nach Betriebsphase der Geschirrspülmaschine mit Reinigungsmitteln, mit Reinigungshilfsmitteln, wie beispielsweise Klarspülmittel und/oder mit Schmutz, der vom Spülgut gelöst wurde, angereichert sein.

Ziel ist es dabei vorzugsweise, einen Spülgang zweckmäßigerweise so durchzuführen, dass ein vordefiniertes Reinigungsergebnis und ein vordefiniertes Trocknungsergebnis möglichst effizient erreicht werden. Gefordert ist dabei insbesondere eine hohe Gesamteffizienz, welche sich aus der Reinigungseffizienz und der Trocknungseffizienz ergibt. Die Reinigungseffizienz entspricht dabei insbesondere dem Verhältnis des mittels eines Spülgangs erzielten Reinigungsergebnisses und dem hierzu erforderlichen Aufwand, wobei der Aufwand mehrere Dimensionen, beispielsweise den Energiebedarf, den Wasserbedarf und/oder den Zeitbedarf, umfassen kann. Weiterhin entspricht die Trocknungseffizienz insbesondere dem Verhältnis des mittels eines Spülgangs erzielten Trocknungsergebnisses und dem hierzu erforderlichen Aufwand, wobei der Aufwand auch hier mehrere Dimensionen, beispielsweise den Energiebedarf und/oder den Zeitbedarf, umfassen kann.

Bei der erfindungsgemäßen Geschirrspülmaschine ist zweckmäßigerweise eine Ablaufsteuereinrichtung vorgesehen, welche einen Spülgang nach einem vorgegebenen Ablauf automatisch steuert. Dabei können in der Ablaufsteuereinrichtung mehrere vorgegebene Abläufe für einen Spülgang hinterlegt sein, von denen jeweils einer zur Durchführung eines Spülgangs herangezogen wird. Die Auswahl eines bestimmten Ablaufs kann insbesondere durch einen Bediener durchgeführt werden. Hierzu kann beispielsweise eine mit der Ablaufsteuereinrichtung verbundene Bedienschnittstelle vorgesehen sein, welche eine Eingabeeinheit zur Eingabe von Bedienbefehlen umfasst. Die Bedienschnittstelle kann zudem eine Ausgabeeinheit zur Ausgabe von Informationen an den Bediener aufweisen. Ggf. ist auch eine voll automatische Auswahl eines Geschirrspülprogramms durch die Ablaufsteuereinrichtung möglich.

Die Ablaufsteuereinrichtung ist so insbesondere ausgebildet, dass ein Spülgang durchführbar ist, der wenigstens einen Teilspülgang zur Reinigung des Spülguts unter Zuhilfenahme von Spülflüssigkeit und mindestens einen Teilspülgang zum Trocknen des Spülguts umfasst.

Ein vorgesehener Ablauf eines derartigen Spülgangs sieht zur Reinigung des Spülguts beispielhaft mehrere Teilspülgänge, nämlich in dieser zeitlichen Reihenfolge insbesondere einen Vorspülgang, einen Reinigungsgang, einen Zwischenspülgang und einen Klarspülgang, vor, bei denen das Spülgut jeweils mit einer Spülflüssigkeit beaufschlagt wird. Diese Teilspülgänge werden daher als spülflüssigkeitsführende Teilspülgänge bezeichnet. Weiterhin sieht der vorgesehene Ablauf einen sich an die spülflüssigkeitsführenden Teilspülgänge anschließenden, nachfolgenden Teilspülgang zum Trocknen des gereinigten Spülguts, nämlich einen Trocknungsgang bzw, Trocknungsvorgang, vor.

Es können jedoch auch Abläufe vorgesehen sein, bei denen einer oder mehrere dieser spülflüssigkeitsführenden Teilspülgänge ausgeblendet sind. Auch sind Abläufe des Spülgangs möglich, bei denen einer oder mehrere dieser Teilspülgänge mehrfach durchlaufen werden.

Der Vorspülgang dient im Beispiel vor allem der Entfernung von gröberen Verschmutzungen vom Spülgut. Der Zweck des nachfolgenden Reinigungsgangs besteht darin, Verschmutzungen vollständig von dem Spülgut zu entfernen, wozu eine mit Reinigungsmittel versetzte Spülflüssigkeit verwendet werden kann. Der nun durchgeführte Zwischenspülgang dient insbesondere der Entfernung von Reinigungsmittelresten, welche am Spülgut anhaften. Der darauffolgende Klarspülgang ist insbesondere zur Vermeidung von Flecken auf dem Spülgut, welche durch gelöste Stoffe im Wasser, wie beispielsweise Salz und/oder Kalk, entstehen könnten, vorgesehen. Hierzu kann die Spülflüssigkeit während des Klarspülgangs mit Klarspülmittel versetzt werden. Eine weitere Aufgabe des Klarspülgangs besteht darin, den nachfolgenden Trocknungsgang vorzubereiten. Dazu kann das Spülgut während des Klarspülgangs auf eine hohe Temperatur aufgeheizt werden.

Der Trocknungsgang beginnt mit der Beendigung der Beaufschlagung des Spülguts mit der Spülflüssigkeit des letzten spülflüssigkeitsführenden Teilspülgangs, also in der Regel nach der Beaufschlagung des Spülguts mit der Klarspülflüssigkeit des Klarspülgangs. Ggf. kann er mit einer sogenannten Abtropfphase eingeleitet werden, während der Flüssigkeit noch vom Spülgut abtropft und am Boden des Spülbehälters gesammelt und vorzugsweise mit Hilfe einer Laugenpumpe aus dem Spülbehälter abgepumpt wird. Nach dem Ende des Klarspülgangs bzw. insbesondere nach Ende der etwaig vorgesehenen Abtropfphase verdunstet die am heißen Spülgut anhaftende Spülflüssigkeit und schlägt sich an der Innenseite des Spülbehälters aufgrund der dort herrschenden niedrigeren Temperatur ab. Das Ende des Trocknungsgangs bestimmt sich durch denjenigen durch das jeweilige Spülprogramm vorgegebenen Zeitpunkt, zu dem die Entnahme des Spülguts aus dem Spülbehälter im trockenen Zustand frühestmöglich vorgesehen ist. Dieser Zeitpunkt fällt in der Regel mit demjenigen Zeitpunkt zusammen, zu dem der Spülgang beendet wird. Die Beendigung des Trocknungsgangs und des Spülgangs insgesamt kann dem Bediener über die Bedienschnittstelle mitgeteilt werden.

Die erfindungsgemäße Geschirrspülmaschine kann dabei durch die Ablaufsteuereinrichtung steuerbare Mittel aufweisen, welche die automatische Beaufschlagung von Spülgut mit Spülflüssigkeit während der spülflüssigkeitsführenden Teilspülgänge ermöglichen. Insbesondere können diese Mittel eine Umwälzpumpe und mindestens eine im Innern des Spülbehälters angeordnete Sprüheinrichtung, insbesondere einen oberen und einen unteren rotierbaren Sprüharm umfassen. Weiterhin kann die Geschirrspülmaschine eine durch die Ablaufsteuereinrichtung steuerbare, vorzugsweise elektrische, Heizeinrichtung aufweisen, um die Spülflüssigkeiten der einzelnen spülflüssigkeitsführenden Teilspülgänge auf die jeweils erforderliche Temperatur zu bringen. Um die zum Spülen vorgesehene Spülflüssigkeit mit den vorgesehenen Reinigungs- und/oder Zusatzstoffen versehen zu können, kann die Geschirrspülmaschine weiterhin eine durch die Ablaufsteuereinrichtung steuerbare Dosiereinrichtung aufweisen.

Die erfindungsgemäße Geschirrspülmaschine weist weiterhin wenigstens einen Wasserbehälter zur Aufnahme von Wasser auf, der in wärmeleitendem Kontakt mit dem Spülbehälter zur Bereitstellung wenigstens einer Kondensationsfläche steht. Der Wasserbehälter ist über eine Befüllvorrichtung mit Wasser befüllbar. Die Befüllvorrichtung kann insbesondere durch die Ablaufsteuereinrichtung der Geschirrspülmaschine steuerbar sein, die zur Steuerung mindestens eines Spülgangs zum Reinigen von Spülgut dient. Sie kann vorzugsweise als ein durch die Ablaufsteuereinrichtung steuerbares Füllventil gebildet sein. Dabei ist vorgesehen, den Wasserbehälter verteilt über die der Zeitdauer des Trocknungsgangs in mehreren Füllphasen mit Wasser zu befüllen, was durch eine entsprechende Steuerung der Befüllvorrichtung, insbesondere des Füllventils, erfolgen kann. Akkumuliert über alle Füllphasen zusammen betrachtet wird somit der Füllstand des Wasserbehälters während des Trocknungsgangs von einem Ausgangsfüllstand bis zu einem Endfüllstand immer mehr gesteigert. Über die Gesamtdauer des Trocknungsgangs hinweg verteilt wird also Wasser in den Wasserbehälter nachgefüllt, so dass dessen Wasserpegel ansteigt. Die Befüllung des Wasserbehälters beginnt damit insbesondere zu dem Zeitpunkt, an dem dessen Ausgangsfüllstand erstmalig erhöht wird, und endet vorzugsweise zu dem Zeitpunkt, an dem dessen Endfüllstand endgültig erreicht wird.

Ziel ist es hierbei, wenigstens eine an einer Innenseite des Spülbehälters vorgesehene Kondensationsfläche wenigstens auf einem Teil ihrer Fläche zu kühlen. Hierzu kann der Wasserbehälter zweckmäßigerweise mit Kaltwasser, insbesondere aus einem Kaltwassernetz, befüllt werden, welches beispielsweise eine Temperatur von weniger als 30°C, weniger als 20°C oder weniger als 15°C aufweist. Ein derartiger Wasserbehälter wird auch Kaltwassertasche oder Wärmetauscher genannt.

Der jeweilige Wasserbehälter kann insbesondere flächig an einer Seitenwand oder an einer Rückwand des Spülbehälters anliegen. Die kühlbare Kondensationsfläche entspricht dabei jenem Bereich des Spülbehälters, der in thermischem Kontakt mit dem Spülbehälter steht.

Insbesondere ist vorgesehen, dass sich die mehreren Füllphasen über einen wesentlichen Teil der Dauer des Trocknungsgangs erstrecken. Hierunter kann vorzugsweise verstanden werden, dass sich die mehreren Füllphasen insgesamt, d.h. akkumuliert, über wenigstens 10% der Dauer des Trocknungsgangs erstrecken. Auf diese Weise kann eine Kühlung der Kondensationsfläche, welche das Auskondensieren von Wasserdampf an der Innenseite des Spülbehälters fördert, während des Trocknungsgangs über einen längeren Zeitraum als bei einem anfänglichen Komplettbefüllen des Wasserbehälters aufrecht erhalten werden, ohne dass dadurch der Innenraum des Spülbehälters und das darin befindliche Spülgut allzu stark abkühlt, was die Verdunstungsneigung von am Spülgut anhaftender Spülflüssigkeit senken würde.

Im Vergleich zu Lösungen, bei denen die Gesamt- bzw. Komplettbefüllung des Wasserbehälters bei oder kurz nach Beginn des Trocknungsgangs in möglichst kurzer Zeit durchgeführt wird, kann so die Trocknungseffizienz deutlich erhöht werden. Insbesondere kann eine dort in einer frühen Phase des Trocknungsgangs entstehende zu starke Abkühlung des Spülguts vermieden werden, so dass die während des Klarspülgangs gespeicherte Eigenwärme des Spülguts und damit die Verdunstung am Spülgut über einen längeren Zeitpunkt, insbesondere weitgehend über die Gesamtdauer des Trocknungsgangs, auf einem hohen Niveau erhalten bleibt. Der bei einer Gesamt-oder Komplettbefüllung des Wasserbehälters zu Beginn des Trocknungsgangs, auftretende Effekt, dass das Auskondensieren an der Kondensationsfläche zu früh, insbesondere in der zweiten Hälfte oder in einer späten Phase des Trocknungsgangs auf Grund eines Anstiegs der Wassertemperatur im Wasserbehälter stark nachlässt, kann jetzt beim erfindungsgemäßen, über die Trocknungszeitdauer verteilten Befüllen des Wasserbehälters vermieden werden, da die zeitliche Streckung des Füllvorgangs eine Vergleichmäßigung der Temperatur des eingefüllten Wassers bewirkt.

Die jeweilige Dauer der jeweiligen Füllphase, die Gesamtzeitdauer der ein oder mehreren Füllphasen, etwaige Totzeiten zwischen mehreren sukzessive aufeinaderfolgenden Füllphasen, und/oder ggf. auch der zeitliche Verlauf der Befüllung während der jeweiligen Füllphase kann unter Berücksichtigung der konstruktiven Gegebenheiten der Geschirrspülmaschine festgelegt werden. Berücksichtigt werden können beispielsweise der Maximalfüllstand des Spülbehälters, die Wärmedämmung des Innenraums des Spülbehälters gegenüber der Umgebung sowie die Wärmespeicherkapazität des Spülbehälters und seiner Tür. Berücksichtigt werden können aber auch sonstige Parameter des Spülgangs, beispielsweise die Ausgangstemperatur des Innenraums des Spülbehälters, die Temperatur des Wassers, mit dem der Wasserbehälter befüllt wird, sowie die Wärmespeicherkapazität des Spülguts.

Insgesamt kann die Trocknungseffizienz eines Spülgangs mit der erfindungsgemäßen Geschirrspülmaschine deutlich verbessert werden. So ist eine Verkürzung der Dauer des Trocknungsgangs und damit des Spülgangs insgesamt bei gleichbleibendem Trocknungsergebnis möglich. Zudem kann eine Energieeinsparung erzielt werden, da die Verbesserung der Trocknungswirkung in vielen Fällen eine Senkung der Temperatur der Spülflüssigkeit während des vorangehenden spülflüssigkeitsführenden Teilspülgangs, insbesondere Klarspülgangs, erlaubt, ohne dass hierdurch Einbussen am Trocknungsergebnis und/oder eine Verlängerung des Trocknungsgangs im Vergleich zu herkömmlichen Geschirrspülmaschinen hinzunehmen wären. Auf diese Weise kann die Zeiteffizienz bzw. die Energieeffizienz der Geschirrspülmaschine insgesamt verbessert werden.

Gemäß einer vorteilhaften Weiterbildung der Erfindung erstrecken sich die mehreren Füllphasen insgesamt über wenigstens 20%, bevorzugt über wenigstens 40%, besonders bevorzugt über wenigstens 60%, und am meisten bevorzugt über wenigstens 80%, der Dauer des Trocknungsschritts. Je länger die von den mehreren, über die Gesamtzeitdauer des jeweiligen Trocknungsgangs verteilten Füllphasen belegte Zeitdauer im Vergleich zur Gesamtzeitdauer des gesamten Trocknungsgangs ist, desto mehr können die erfindungsgemäßen Vorteile realisiert werden. Insbesondere kann so die Verdunstung der Spülflüssigkeit und das Auskondensieren des dadurch entstehenden Wasserdampfs im Verlauf des Trocknungsgangs besonders gut vergleichmäßigt werden, was einer Optimierung der Trocknungseffizienz dienlich ist. Insbesondere kann es dazu zweckmäßig sei, wenn die ein oder mehreren Füllphasen die Gesamtzeitdauer des jeweiligen Trocknungsgangs möglichst gleichmäßig belegen.

Nach einer zweckmäßigen Weiterbildung der Erfindung erstrecken sich die mehreren Füllphasen insgesamt über wenigstens 10 Minuten, bevorzugt über wenigstens 20 Minuten, besonders bevorzugt über wenigstens 30 Minuten, und am meisten bevorzugt über wenigstens 40 Minuten. Unabhängig von der vorgesehenen Dauer des Trocknungsgangs hat es sich gezeigt, dass die Trocknungseffizienz verbessert werden kann, wenn eine Mindestgesamtdauer für die mehreren Füllphasen festgelegt ist. Insbesondere in solchen Fällen, bei denen für den Trocknungsgang eine vergleichsweise kurze Gesamtdauer vorgesehen ist, kann so die Trocknungswirkung effizienter gestaltet werden.

Gemäß einer vorteilhaften Weiterbildung der Erfindung beträgt der Ausgangsfüllstand des Wasserbehälters weniger als 10%, bevorzugt weniger als 5%, besonders bevorzugt weniger als 2%, eines konstruktiv bedingten Maximalfüllstands und/oder der Endfüllstand des Wasserbehälters mehr als 90%, bevorzugt mehr als 95%, besonders bevorzugt mehr als 98%, des konstruktiv bedingten Maximalfüllstands. Auf diese Weise kann die Trocknungseffizienz der Geschirrspülmaschine weiter verbessert werden. So ist es von Vorteil, wenn der Wasserbehälter zu Beginn des Trocknungsgangs einen möglichst geringen Füllstand aufweist. Auf diese Weise steht während des Trocknungsgangs nahezu das Maximalvolumen des Wasserbehälters zur Befüllung mit kaltem Wasser zur Verfügung, was die Steuerbarkeit der Kühlung der Kondensationsfläche verbessert. Wenn der Endfüllstand nahe am Maximalfüllstand liegt, kann die Kühlung der Kondensationsfläche auch gegen Ende des Trocknungsgangs effektiv aufrechterhalten werden.

Gemäß der Erfindung erfolgt die Befüllung des Wasserbehälters in mehreren Stufen, d.h. die Befüllung des Wasserbehälters wird über die Zeitdauer des jeweiligen Trocknungsgangs betrachtet während mehrerer zeitlich aufeinanderfolgender Füllphasen schrittweise in mehreren Stufen durchgeführt. Eine derartige portionsweise Befüllung mittels der Befüllvorrichtung ermöglicht einerseits die Erzielung der erfindungsgemäßen Vorteile und ist andererseits einfach umzusetzen. Bei jeder Stufe der Befüllung wird die Befüllvorrichtung, insbesondere das Füllventil, zunächst geöffnet und dann wieder geschlossen, so dass sich der Füllstand bzw. Wasserpegel bei jeder Stufe erhöht. Falls die Befüllvorrichtung von der Steuereinrichtung der Geschirrspülmaschine aus kontrolliert bzw. gesteuert wird, sind dabei vergleichsweise wenige und einfache Steuerbefehle von der Ablaufsteuereinrichtung zu erzeugen und zur Befüllvorrichtung, insbesondere zum Füllventil zu übertragen. Die Füllphase beginnt dabei beim Öffnen des Steuerventils während der ersten Stufe und endet mit dem Schließen des Füllventils bei der letzten vorgesehenen Stufe. Die einzelnen Stufen können dabei identische oder unterschiedliche Füllstandszunahmen vorsehen. Der Abstand zwischen aufeinanderfolgenden Stufen kann gleichbleibend oder unterschiedlich sein.

Gemäß einer vorteilhaften Weiterbildung der Erfindung erfolgt die Befüllung des Wasserbehälters portionsweise bzw. schrittweise vorzugsweise in wenigstens drei Stufen. Eine erste Stufe kann dabei eine hinreichende Kühlung der Kondensationsfläche insbesondere in einer anfänglichen Phase des Trocknungsgangs bewirken. Eine zweite Stufe kann dabei dazu dienen, dass eine Abnahme der Kühlung der Kondensationsfläche durch eine Erwärmung des während der ersten Stufe eingefüllten Wassers ausgeglichen wird. Diese zweite Befüllungsstufe kann insbesondere in einer mittleren Phase des Trocknungsgangs erfolgen. Eine dritte Stufe kann insbesondere unmittelbar vor Abschluss des Trocknungsgangs vorgesehen sein, wodurch ein Erreichen des Maximalfüllstands bewirkt werden kann, ohne dass der Spülbehälter während des Trocknungsgangs in unerwünschtem Umfang abgekühlt wird. Eine vollständige Füllung des Wasserbehälters zu Ende des Trocknungsgangs ist beispielsweise von Vorteil, wenn das im Wasserbehälter befindliche Wasser in einem später folgenden Spülgang zur Bildung einer Spülflüssigkeit verwendet werden soll. Die Wiederverwendung des Wassers des Wasserbehälters kann dabei in vielen Fällen den Energiebedarf der Geschirrspülmaschine senken, da es zu Beginn des folgenden Spülgangs Raumtemperatur aufweist, welche in der Regel höher liegt als die Temperatur einer üblichen gebäudeseitigen Kaltwasserversorgung. Diese Energieeinsparung kann maximiert werden, wenn der Wasserbehälter maximal befüllt wird.

Nach einem nicht zur Erfindung gehörenden Alternative kann die Befüllung des Wasserbehälters über die Zeitdauer des jeweiligen Trocknungsgangs betrachtet während einer durchgehenden Füllphase kontinuierlich erfolgen. Unter einer kontinuierlichen Befüllung des Wasserbehälters wird verstanden, dass die Befüllvorrichtung, insbesondere das Füllventil, während des Trocknungsgangs lediglich einmal geöffnet und lediglich einmal geschlossen wird. Die erforderliche Dauer der Füllphase, welche sich aus dem zeitlichen Abstand zwischen dem Öffnen und dem Schließen des Füllventils ergibt, kann dabei dadurch erreicht werden, dass die Durchflussrate durch die Befüllvorrichtung, insbesondere das Füllventil, gering gehalten wird. Es wird also insbesondere eine gedrosselte Befüllung des Wasserbehälters mittels der Befüllvorrichtung während einer einzigen Füllphase vorgenommen, die sich im Wesentlichen mit der Gesamtzeitdauer des jeweiligen Trocknungsgangs deckt. Bei einer kontinuierlichen Befüllung kann das Kondensieren des Wasserdampfs besonders gleichmäßig erfolgen, was der Trocknungseffizienz besonders dienlich ist.

Gemäß einer vorteilhaften Weiterbildung der Erfindung kann das Füllventil als Sperrventil ausgebildet sein. Unter einem Sperrventil wird ein solches Ventil verstanden, welches lediglich einen Offenzustand und einen Geschlossenzustand aufweist. Ein Sperrventil kann damit einfach aufgebaut und einfach zu steuern sein.

Nach einer zweckmäßigen Weiterbildung der Erfindung kann das Füllventil als Stellventil ausgebildet sein. Ein Stellventil ist so aufgebaut, dass die Durchflussrate des Wassers bei gegebenen Randbedingungen, beispielsweise bei gegebenem Druck des Wassers, steuerbar ist. Auf diese Weise kann der Füllstand optimal an die jeweiligen Erfordernisse angepasst werden.

Gemäß einer vorteilhaften Weiterbildung der Erfindung kann das Steuern der Fülleinrichtung unter Berücksichtigung von Signalen wenigstens eines Sensors erfolgen, der einen das Trocknen des Spülguts beeinflussenden Parameter erfasst. Im Vergleich zu einer vorgegebenen zeitlich orientierten Steuerung des Füllventils kann so die Trocknungseffizienz weiter verbessert werden. In Abhängigkeit vom realen Ablauf des Trocknungsvorgangs, der beispielsweise auch von Störgrößen, wie beispielsweise der Umgebungstemperatur, bestimmt wird, kann so eine weiter optimierte Befüllung des Wasserbehälters erreicht werden, was der Trocknungseffizienz zu Gute kommen kann.

Nach einer zweckmäßigen Weiterbildung der Erfindung kann ein Sensor zur Messung einer Temperatur des in dem Wasserbehälter befindlichen Wassers vorgesehen sein. Bei der Temperatur des im Wasserbehälter befindlichen Wassers handelt es sich um einen Parameter, der das Auskondensieren an der Kondensationsfläche wesentlich bestimmt. Die Erfassung dieser Temperatur und deren Berücksichtigung im Ablauf der Füllphase können daher zu einer wesentlichen Erhöhung der Trocknungseffizienz führen.

Gemäß einer vorteilhaften Weiterbildung der Erfindung kann ein Sensor zur Messung einer Temperatur der Kondensationsfläche vorgesehen sein. Auch bei der Temperatur der Kondensationsfläche handelt es sich um einen Parameter, der das Auskondensieren an der Kondensationsfläche bestimmt, so dass dessen Erfassung und Berücksichtigung eine Optimierung der Trocknungseffizienz ermöglicht.

Nach einer zweckmäßigen Weiterbildung der Erfindung kann ein Sensor zur Messung einer Lufttemperatur in dem Spülbehälter vorgesehen sein. Die Lufttemperatur in dem Spülbehälter beeinflusst sowohl die Verdunstung der Spülflüssigkeit am Spülgut als auch das Auskondensieren des entstehenden Wasserdampfs an der Kondensationsfläche. Damit kann auch dessen Erfassung und Berücksichtigung eine Optimierung der Trocknungseffizienz ermöglichen.

Gemäß einer vorteilhaften Weiterbildung der Erfindung kann ein Sensor zur Messung einer Luftfeuchtigkeit in dem Spülbehälter vorgesehen sein. Auch die Luftfeuchtigkeit in dem Spülbehälter beeinflusst die Verdunstung der Spülflüssigkeit am Spülgut und auch das Auskondensieren des entstehenden Wasserdampfs an der Kondensationsfläche, so dass deren Erfassung und Berücksichtigung eine weitere Optimierung der Trocknungseffizienz leisten kann.

Nach einer zweckmäßigen Weiterbildung der Erfindung kann ein Sensor zur Messung einer Menge, Masse und/oder einer Art des in dem Spülbehälter befindlichen Spülguts vorgesehen sein. Menge, Masse und/oder einer Art des in dem Spülbehälter befindlichen Spülguts beeinflussen den zeitlichen Verlauf der Abkühlung des Innenraums des Spülbehälters während des Trocknungsgangs wesentlich. Die Erfassung dieser Parameter und deren Berücksichtigung im Ablauf der Füllphase können daher zu einer wesentlichen Erhöhung der Trocknungseffizienz führen.

Gemäß einer vorteilhaften Weiterbildung der Erfindung kann zwischen dem Beginn des Trocknungsgangs und dem Beginn der ersten Füllphase insbesondere eine Abtropfphase vorgesehen sein. Auf diese Weise kann eine unerwünschte Erwärmung des Wassers im Wasserbehälter in einer anfänglichen Phase der Füllphase verringert werden, was die Trocknungseffizienz fördert.

Nach einer zweckmäßigen Weiterbildung der Erfindung kann die Befüllvorrichtung, insbesondere das Füllventil, zur Beschickung des Wasserbehälters mit Wasser aus einer externen Wasserversorgung vorgesehen sein. Bei der externen Wasserversorgung kann es sich beispielsweise um eine gebäudeseitige Kaltwasserversorgung handeln, welche typischerweise hinreichend kaltes Wasser bereitstellt.

Die in den abhängigen Ansprüchen wiedergegebenen und/oder vorstehend erläuterten vorteilhaften Aus- und Weiterbildungen der Erfindung können einzeln oder in beliebiger Kombination miteinander bei der erfindungsgemäßen Geschirrspülmaschine vorgesehen sein.

Weiterhin betrifft die Erfindung ein Verfahren zur Durchführung wenigstens eines Spülgangs zum Reinigen von Spülgut im Spülbehälter einer Geschirrspülmaschine, welche wenigstens einen Wasserbehälter, der in wärmeleitendem Kontakt mit dem Spülbehälter zur Bereitstellung wenigstens einer Kondensationsfläche des Spülbehälters während wenigstens eines Trocknungsgangs des jeweiligen Spülgangs dient, und eine Befüllvorrichtung zum Befüllen des Wasserbehälters mit Wasser umfasst, welches dadurch gekennzeichnet ist, dass der Wasserbehälter mittels der Befüllvorrichtung verteilt über die Zeitdauer des jeweiligen Trocknungsgangs in mehreren Füllphasen mit Wasser befüllt wird, wobei die Geschirrspülmaschine nach mindestens einem der vorhergehenden Aspekte ausgebildet ist. Gemäß der Erfindung wird der Wasserbehälter mittels der Befüllvorrichtung verteilt über die Zeitdauer des jeweiligen Trocknungsgangs in mehreren Füllphasen mit Wasser so befüllt wird, dass die Befüllung des Wasserbehälters über die Zeitdauer des jeweiligen Trocknungsgangs betrachtet während mehrerer zeitlich aufeinanderfolgender Füllphasen schrittweise in mehreren Stufen erfolgt und akkumuliert über alle Füllphasen zusammen betrachtet der Füllstand des Wasserbehälters während des Trocknungsgangs von einem Ausgangsfüllstand bis zu einem Endfüllstand immer mehr gesteigert wird.

Bei dem erfindungsgemäßen Verfahren ist insbesondere vorgesehen, dass die Füllphasen derart durchgeführt werden, dass sie sich über einen wesentlichen Teil der Dauer des Trocknungsgangs erstrecken.

Das erfindungsgemäße Verfahren ermöglicht eine Verbesserung der Trocknungswirkung während des Trocknungsgangs einer mit einem Wasserbehälter der genannten Art ausgerüsteten Geschirrspülmaschine. Hierdurch ist eine Verkürzung der Dauer des Trocknungsgangs und damit des Spülgangs insgesamt bei gleichbleibendem Trocknungsergebnis möglich. Zudem kann eine Energieeinsparung erzielt werden, da die Verbesserung der Trocknungswirkung in vielen Fällen eine Senkung der Temperatur der Spülflüssigkeit während des vorangehenden spülflüssigkeitsführenden Teilspülgangs erlaubt, ohne dass hierdurch Einbußen am Trocknungsergebnis und/oder eine Verlängerung des Trocknungsgangs im Vergleich zu herkömmlichen Verfahren hinzunehmen wären. Auf diese Weise kann die Zeiteffizienz bzw. die Energieeffizienz beim Trocknen von Spülgut verbessert werden. Zudem kann das Verfahren bei konstruktiv einfach gehaltenen Geschirrspülmaschinen angewendet werden, da beispielsweise aufwendige Umluft- oder Abluftgebläse zur Trocknung des Spülguts in der Regel nicht erforderlich sind.

Vorteilhafte Aus- und Weiterbildungen des erfindungsgemäßen Verfahrens sind bei der Beschreibung der erfindungsgemäßen Geschirrspülmaschine erläutert. Die Aus- und Weiterbildungen des erfindungsgemäßen Verfahrens können einzeln oder in beliebiger Kombination miteinander bei dem erfindungsgemäßen Verfahren zur Anwendung kommen.

Die Erfindung und ihre Weiterbildungen sowie deren Vorteile werden nachfolgend anhand von Figuren näher erläutert.

Es zeigen:
- **Figur 1**: ein vorteilhaftes Ausführungsbeispiel einer zur erfindungsgemäßen Durchführung wenigstens eines Spülgangs erfindungsgemäß ausgebildeten Haushaltsgeschirrspülmaschine in einer schematischen räumlichen Ansicht,
- **Figur 2**: eine weitere Darstellung der Geschirrspülmaschine von Figur 1 in einer schematischen Frontansicht,
- **Figur 3**: einen schematisierten, beispielhaften, zeitlichen Ablauf eines Spülgangs der erfindungsgemäßen Geschirrspülmaschine der Figuren 1, 2, und
- **Figur 4**: einen nicht zur Erfindung gehörenden, schematisierten, beispielhaften, zeitlichen Ablauf eines Spülgangs derGeschirrspülmaschine der Figuren 1, 2.

In den folgenden Figuren sind einander entsprechende Teile mit denselben Bezugszeichen versehen. Dabei sind nur diejenigen Bestandteile einer Geschirrspülmaschine mit Bezugszeichen versehen und erläutert, welche für das Verständnis der Erfindung erforderlich sind. Es versteht sich von selbst, dass die erfindungsgemäße Geschirrspülmaschine weitere Teile und Baugruppen umfassen kann.

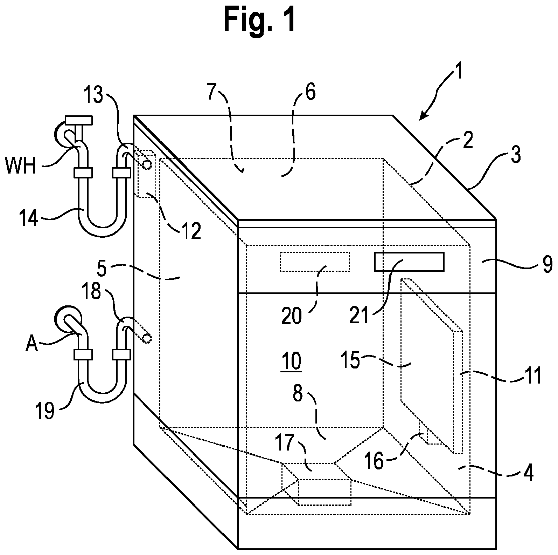

Figur 1 zeigt eine schematische räumliche Darstellung eines Ausführungsbeispiels einer erfindungsgemäßen Geschirrspülmaschine 1. Diese weist einen Spülbehälter 2 auf, der im Inneren eines Gehäuses 3 der Geschirrspülmaschine 1 angeordnet ist. Der Spülbehälter 2 umfasst eine erste Seitenwand 4, eine zweite Seitenwand 5, eine Rückwand 6, eine Deckenwand 7 und eine Bodenwanne 8. Seine Wände 4, 5, 6, 7 sind bevorzugt aus Edelstahlblech gefertigt. Demgegenüber kann es sich bei der Bodenwanne 8 bevorzugt um ein Kunststoffteil handeln.

Der Spülbehälter 2 dient insbesondere der Aufnahme von Spülgut während der Durchführung eines Spülgangs zum Reinigen und/oder Trocknen desselben. Er weist insbesondere eine quaderförmige Geometrieform mit einer frontal angeordneten Beschickungsöffnung auf. Die an der Vorderseite des Spülbehälters 2 vorgesehene Beschickungsöffnung ist durch eine Tür 9 verschließbar, so dass ein Innenraum 10 des Spülbehälters 2, der auch Spülkammer 10 genannt wird, bei geschlossener Tür 9 im Wesentlichen abgeschlossen ist.

An der ersten, rechts dargestellten Seitenwand 4 des Spülbehälters 2 ist ein Wasserbehälter 11 derart angeordnet, dass dieser in thermischem Kontakt mit dem Spülbehälter 2 steht. Der Wasserbehälter 11 könnte jedoch auch an der zweiten Seitenwand 5, an der Rückwand 6, an der Deckenwand 7 oder an der Bodenwand 8 angeordnet und thermisch mit dem Spülbehälter verbunden sein. Im Beispiel der Figur 1 liegt der Wasserbehälter 11 flächig mit einer Seite an dem Spülbehälter 2 an.

Zum Befüllen des Wasserbehälters 11 mit Wasser ist als Befüllungsvorrichtung ein Füllventil 12 vorgesehen, dessen Ausgang über eine in Figur 1 nicht gezeigte Leitung mit dem Wasserbehälter 11 verbunden ist. Der Eingang des Füllventils 12 hingegen ist mit einem am Gehäuse 3 angeordneten Zulaufanschluss 13 verbunden. Der Zulaufanschluss 13 selbst ist über einen vorzugsweise flexiblen Zulaufschlauch 14 mit einem Wasserhahn WH einer gebäudeseitigen Kaltwasserversorgung WH verbunden. Auf diese Weise ist es möglich, den Wasserbehälter 11 mit Wasser aus der gebäudeseitigen Kaltwasserversorgung WH zu befüllen, welches typischerweise eine Temperatur im Bereich von 10°C bis 20°C aufweist. Diese Temperatur dieses Wassers liegt in aller Regel unter der Temperatur des Spülbehälters 2 während der Durchführung eines Trocknungsgangs eines Spülgangs, so dass eine Kondensationsfläche 15 an der Innenseite des Spülbehälters 2 durch Befüllen des Wasserbehälters 11 mit Wasser aus der gebäudeseitigen Kaltwasserinstallation WH gekühlt werden kann. Die kühlbare Kondensationsfläche 15 liegt dabei der Anlagefläche des Wasserbehälters 11 am Spülbehälter 2 gegenüber. Die Kühlung der Kondensationsfläche 15 kann durch wärmeleitende Eigenschaften des Materials des Spülbehälters 2 gefördert werden, weshalb die Ausbildung der Kondensationsfläche 15 an einem aus Edelstahlblech gefertigten Abschnitt des Spülbehälters 2 zweckmäßig ist.

Weiterhin ist ein Ablassventil 16 als Entleerungsvorrichtung vorgesehen, welches es ermöglicht, das im Wasserbehälter 11 befindliche Wasser in die Spülkammer 10 abzulassen, wo es sich in einem in die Bodenwanne 8 integrierten Pumpentopf 17 sammeln kann. Im oder am Pumpentopf 17 ist eine in Figur 1 nicht gezeigte Umwälzpumpe sowie eine in Figur 1 ebenfalls nicht gezeigte Laugenpumpe angeordnet. Die Umwälzpumpe dient der Beaufschlagung von Spülgut mit einer Spülflüssigkeit, welche unter Verwendung von Wasser, beispielsweise aus dem Wasserbehälter 11, gebildet werden kann. Die Laugenpumpe dient demgegenüber dem Abpumpen einer nicht mehr benötigten, beispielsweise verschmutzten Spülflüssigkeit nach außen. Hierzu ist deren Ausgang mit einen am Gehäuse 3 angeordneten Ablaufanschluss 18 verbunden, der seinerseits über einen vorzugsweise flexiblen Abwasserschlauch 19 mit einem gebäudeseitig installierten Abwasserrohr A verbunden ist.

Die Geschirrspülmaschine 1 weist ferner eine Ablaufsteuereinrichtung 20 auf, in der wenigstens ein vorgesehener Ablauf, insbesondere Geschirrspülprogramm, für einen Spülgang gespeichert ist. Die Ablaufsteuereinrichtung 20 ist im Ausführungsbeispiel der Figur 1 im Inneren der Tür 9 des Spülbehälters 2 angeordnet. Sie könnte jedoch auch an einer anderen Stelle, wie z.B. der Bodenbaugruppe, der Geschirrspülmaschine 1 angeordnet sein. Ebenfalls im Bereich der Tür 9 ist eine Bedienschnittstelle 21 angeordnet, welche eine Eingabeeinheit zur Eingabe von Bedienbefehlen und eine Ausgabeeinheit zur Ausgabe von Informationen ermöglicht. Auch die Bedienschnittstelle 21 könnte jedoch an einer anderen Stelle der Geschirrspülmaschine 1 angeordnet sein.

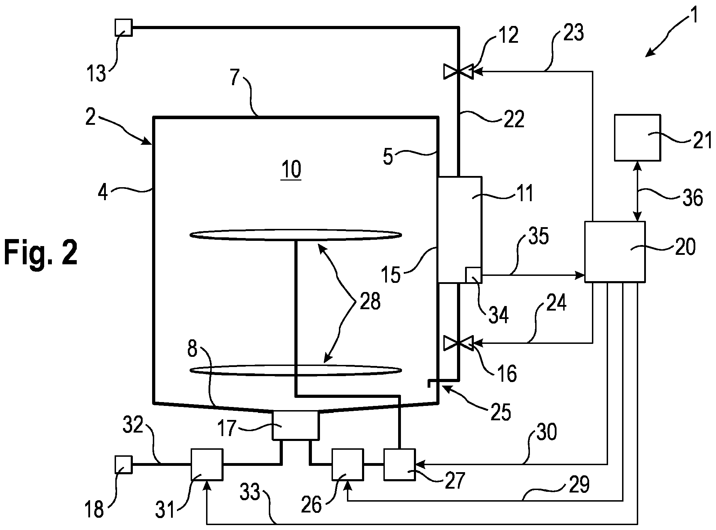

Figur 2 zeigt eine detailliertere Darstellung der funktionalen Komponenten der Geschirrspülmaschine 1 von Figur 1 in schematischer Form. Das Füllventil 12 ist über eine Verbindungsleitung 22 derart mit dem Wasserbehälter 11 verbunden, dass dieser bei geöffnetem Füllventil 12 mit Wasser befüllt werden kann. In der Verbindungsleitung 22 kann eine Rücksaugsicherung, beispielsweise eine Rohrunterbrechung, und/oder eine Wasserbehandlungsanlage, beispielsweise eine Enthärtungs- und/oder Entsalzungsanlage, vorgesehen sein.

Das Füllventil 12 ist dabei durch die Ablaufsteuereinrichtung 20 steuerbar, wozu eine Steuerleitung 23 vorgesehen ist, welche der Übertragung von Steuerbefehlen von der Ablaufsteuereinrichtung 20 zum Füllventil 12 dient. Eine weitere Steuerleitung 24 dient der Übertragung von Steuerbefehlen von der Ablaufsteuereinrichtung 20 zum Ablassventil 16 des Wasserbehälters, so dass auch das Ablassventil 16 durch die Ablaufsteuereinrichtung 20 steuerbar ist. Auf diese Weise kann im Wasserbehälter 11 befindliches Wasser über das Ablassventil 16 und einen sich daran stromabwärts anschließenden Ablauf 25 bedarfsgerecht gesteuert in die Spülkammer 10 eingeleitet werden.

Eine Eingangsseite einer Umwälzpumpe 26 ist mit dem Pumpentopf 17 flüssigkeitsleitend verbunden. Die Umwälzpumpe 26 ermöglicht es, Spülflüssigkeit aus dem Pumpentopf 17 über eine Heizeinrichtung 27 und eine in der Spülkammer 10 angeordnete Sprüheinrichtung 28, insbesondere einen oder mehrere rotierende Sprüharme, in die Spülkammer 10 einzusprühen, um so darin befindliches Spülgut zu behandeln. Die Umwälzpumpe 26 ist dabei hinsichtlich ihrer Drehzahl über eine Steuerleitung 29 durch die Ablaufsteuereinrichtung 20 kontrollierbar, insbesondere steuerbar oder regelbar. Weiterhin ist die Heizeinrichtung 27 über eine weitere Steuerleitung 30 ebenfalls durch die Ablaufsteuereinrichtung 20 einstellbar, insbesondere steuerbar oder regelbar.

Ferner ist eine Eingangsseite einer Laugenpumpe 31 mit dem Pumpentopf 17 flüssigkeitsleitend verbunden. Die Ausgangsseite der Laugenpumpe 31 ist dabei über eine Verbindungsleitung 32 mit dem gehäusefesten Ablaufanschluss 18 verbunden, so dass nicht mehr benötigte Spülflüssigkeit abgepumpt werden kann. Die Laugenpumpe 31 ist dabei über eine Steuerleitung 33 durch die Ablaufsteuereinrichtung 20 kontrollierbar, insbesondere steuerbar oder regelbar.

Die erfindungsgemäße Geschirrspülmaschine 1 kann einen Sensor 34 umfassen, der zur Erfassung eines einen Trocknungsvorgang des Spülguts beeinflussenden Parameters ausgebildet ist. Figur 2 zeigt beispielsweise einen Sensor 34, der die Temperatur des im Wasserbehälter 11 befindlichen Wassers erfasst. Dieser Sensor 34 ist über eine Signalleitung 35 mit der Ablaufsteuereinrichtung 20 verbunden, wobei diese zur Berücksichtigung der Signale des Sensors 34 bei der Steuerung des Füllstands des Wasserbehälters 11 zumindest während des Trocknungsgangs eines Spülgangs ausgebildet ist. Alternativ oder zusätzlich können ein oder mehrere Sensoren zur Messung einer Temperatur der Kondensationsfläche 15, zur Messung einer Lufttemperatur in dem Spülbehälter 2, zur Messung einer Luftfeuchtigkeit in dem Spülbehälter 2,und/oder zur Messung einer Menge, Masse und/oder einer Art des in dem Spülbehälter 2 befindlichen Spülguts vorgesehen sein.

Während es in aller Regel ausreichend ist, dass die Steuerleitungen 23, 24, 29, 30, 33 und die Signalleitung 35, wie durch entsprechende Pfeile veranschaulicht, zur unidirektionalen Informationsübertragung verwendet werden, ist eine Steuer- und Signalleitung 36, welche die Ablaufsteuereinrichtung 20 und die Bedienschnittstelle 21 verbindet, vorzugsweise zur bidirektionalen Informationsübertragung vorgesehen, was ebenfalls durch entsprechende Pfeile veranschaulicht ist. So können Bedienbefehle von der Bedienschnittstelle 21 zur Ablaufsteuereinrichtung 20 und Bedieninformationen von der Ablaufsteuereinrichtung 20 zur Bedienschnittstelle 21 übertragen werden.

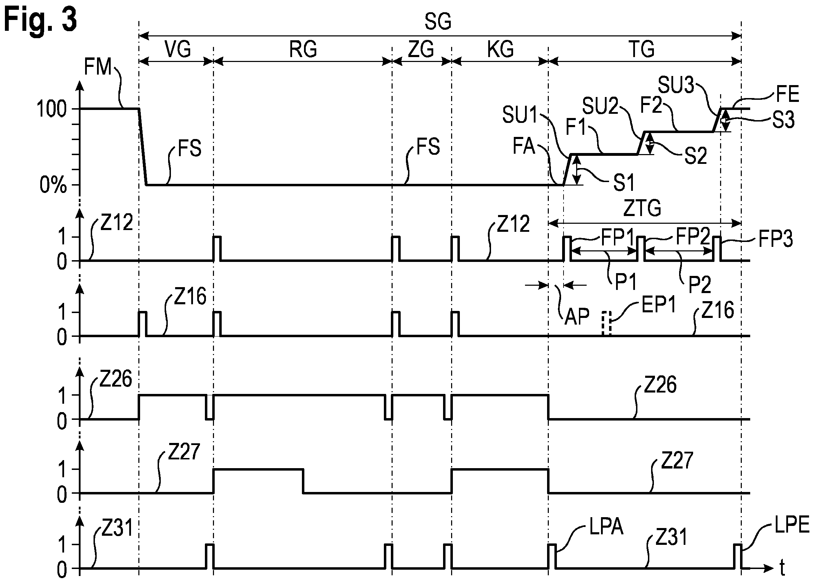

Figur 3 zeigt beispielhaft einen Ablauf eines durch die Ablaufsteuereinrichtung 20 gesteuerten Spülgangs SG. Der Spülgang umfasst in dieser Reihenfolge einen Vorspülgang VG, einen Reinigungsgang RG, einen Zwischenspülgang ZG, einen Klarspülgang KG und einen Trocknungsgang TG. Auf einer gemeinsamen Zeitachse t zeigen eine Kurve FS den Füllstand des Wasserbehälters 11 mit Wasser, eine Kurve Z12 den Betriebszustand des Füllventils 12, eine Kurve Z16 den Betriebszustand des Ablassventils 16, eine Kurve Z26 den Betriebszustand der Umwälzpumpe 26, eine Kurve Z27 den Betriebszustand der Heizeinrichtung 27 und eine Kurve Z31 den Betriebszustand der Laugenpumpe 31.

Die Kurve FS zeigt dabei den Füllstand des Wasserbehälters 11 relativ zu einem konstruktiv bedingten Maximalfüllstand FM in Prozent. Der Maximalfüllstand FM ist dann erreicht, wenn das gesamte Fassungsvolumen des Wasserbehälters mit Wasser gefüllt ist. Bei den Kurven Z12 und Z16 entspricht die Einnahme des Wertes "1" einem geöffneten Ventil und die Einnahme des Wertes "0" einem geschossenen Ventil. Weiterhin entspricht bei den Kurven Z26, Z27 und Z31 der Wert "1" einem Einschaltzustand und der Wert "0" einem Ausschaltzustand der jeweiligen Einrichtung.

Zu Beginn des Spülgangs SG ist der Wasserbehälter 11 mit Wasser aus einem vorangegangenen nicht dargestellten Spülgang vollständig gefüllt, so dass die Kurve FS den Wert "100%" einnimmt. Das während des vorangegangenen Spülgangs zur Kühlung der Kondensationsfläche 15 verwendete Wasser wird zu Beginn des ersten spülflüssigkeitsführenden Teilspülgangs VG, im Beispiel zu Beginn des Vorspülgangs VG, durch kurzzeitiges Öffnen des Ablassventils 16 in die Spülkammer 10 eingeleitet und dort als Spülflüssigkeit mittels der Umwälzpumpe 26 umgewälzt. Durch eine derartige Verwendung des vormals zur Kühlung der Kondensationsfläche 15 verwendeten Wassers kann der Wasserbedarf der Geschirrspülmaschine verringert werden.

Wenn genügend viel Zeit zwischen dem Ende des Spülgangs eines gewählten Geschirrspülprogramms und einem neu gestarteten Geschirrspülprogramm vergangen ist, so nimmt das im Vorratsbehälter gespeicherte Wasser Raumtemperatur an, d.h. es weist zu Beginn des Vorspülgangs VG Raumtemperatur auf, welche üblicherweise über der Temperatur der gebäudeseitigen Kaltwasserversorgung WH liegt. Aus diesem Grund kann eine höhere Reinigungswirkung des Vorspülgangs VG erreicht werden, ohne dass hierzu die Heizeinrichtung 27 eingeschaltet werden müsste. Falls für den Vorspülgang VG jedoch eine höhere Temperatur gewünscht ist, kann so zumindest der hierzu erforderliche Heizenergieaufwand der dann hinzugeschalteten Heizungseinrichtung verringert werden. Dabei ist es von Vorteil, wenn die im Wasserbehälter befindliche Wassermenge gerade dem Wasserbedarf des Vorspülgangs VG entspricht. Alternativ wäre es auch möglich, das während des vorangegangenen Spülgangs zur Kühlung der Kondensationsfläche 15 verwendete Wasser in einem späteren Teilspülgang des Spülgangs zu verwenden.

In einer Endphase des Vorspülgangs VG wird die Umwälzpumpe 26 abgeschaltet und die Laugenpumpe 31 eingeschaltet, um die nun verschmutzte Spülflüssigkeit abzupumpen.

Zu Beginn des nun folgenden Reinigungsgangs RG wird die Spülkammer mit sauberem Wasser von der Kaltwasserversorgung WH beschickt, indem gleichzeitig das Füllventil 12 und das Ablassventil 16 des Wasserbehälters 11 geöffnet wird. Ebenfalls zu Beginn des Reinigungsgangs RG werden die Umwälzpumpe 26 und die Heizeinrichtung 27 eingeschaltet. Wenn die gewünschte Temperatur der Spülflüssigkeit des Reinigungsgangs RG, beispielsweise im Bereich von 40°C bis 60°C erreicht ist, wird die Heizeinrichtung 27 wieder abgeschaltet. Die Temperatur der Spülflüssigkeit kann dabei mit einem nicht dargestellten Sensor z.B. am oder im Spülbehälter erfasst werden. Die Umwälzpumpe 26 bleibt dabei für eine sogenannte Nachwaschphase weiter eingeschaltet, um die Reinigung des Spülguts weiterzuführen. In einer Endphase des Reinigungsgangs RG wird auch die Umwälzpumpe 26 abgeschaltet und die Laugenpumpe 31 eingeschaltet, um die nun verschmutzte Spülflüssigkeit des Reinigungsgangs RG abzupumpen.

Der nun folgende Zwischenspülgang ZG verläuft analog zum Reinigungsgang RG, wobei allerdings eine Zuschaltung der Heizeinrichtung 27 in der Regel unterbleiben kann.

Bei dem nun nachfolgenden Klarspülgang KG wird in einer anfänglichen Phase erneut Wasser von der Kaltwasserversorgung WH in die Spülkammer 10 eingeleitet, wozu das Füllventil 12 und das Ablassventil 16 des Wasserbehälters 11 erneut gleichzeitig geöffnet werden. Die nun gebildete Spülflüssigkeit wird nun mit der Umwälzpumpe 26 umgewälzt und dabei mit der Heizeinrichtung 27 auf eine vergleichsweise hohe Temperatur von beispielsweise zwischen 60°C und 80°C gebracht. Hierdurch wird auch das Spülgut stark erwärmt. Wenn die gewünschte Temperatur erreicht ist, was ebenfalls mit dem bereits erwähnten Sensor festgestellt werden kann, werden Umwälzpumpe 26 und Heizeinrichtung 27 abgeschaltet und der Klarspülgang KG damit beendet.

Mit dem Abschalten der Umwälzpumpe 26 beginnt die Trocknung des Spülguts und damit der Trocknungsgang TG. Dabei wird in dieser frühen Phase des Trocknungsgangs TG die Laugenpumpe 31 eingeschaltet, um eine möglichst große Menge der heißen, vom Spülgut abtropfenden Klarspülflüssigkeit frühzeitig aus der Geschirrspülmaschine 1 abzupumpen, um so die Verdunstung von Klarspülflüssigkeit und Dampfbildung im Spülbehälter zu verringern, so dass die Trocknungswirkung erhöht werden kann. Dieser Einschaltzustand der Laugenpumpe ist in der Figur 3 in der Ablaufkurve Z31 der Laugenpumpe eingezeichnet und mit LPA bezeichnet. Vor, während und/oder nach der Einschaltzeitdauer der Laugenpumpe ist zu Beginn des Trocknungsgangs TG ggf. zunächst noch eine kurze Abtropfphase AP vorgesehen, die dazu dient, einen wesentlichen Teil der am Spülgut anhaftenden Klarspülflüssigkeit abtropfen zu lassen, bevor die Befüllung des Wasserbehälters mit Wasser der Kaltwasserversorgung erfolgt. Wenn die Befüllung des Wasserbehälters mit Wasser erst nach dieser Abtropfphase begonnen wird, kann die Erwärmung des Wassers im Wasserbehälter 11 über die Gesamtzeitdauer ZTG des Trocknungsgangs TG hinweg betrachtet verringert werden, was der Trocknungseffizienz zu Gute kommt.

Während der Zeitdauer ZTG des Trocknungsgangs TG sind nach Abschluss der Abtropfphase AP mehrere, hier drei, Füllphasen FP1, FP2, FP3 vorgesehen, in der der Füllstand FS des Wasserbehälters 11 von einem Ausgangsfüllstand FA bis zu einem Endfüllstand FE stufenweise erhöht wird. Der Ausgangsfüllstand FA entspricht hier im Ausführungsbeispiel im Wesentlichen dem eines leeren Wasserbehälters. Der Endfüllstand FE ist im Wasserbehälter 11 dann erreicht, wenn er im Wesentlichen bis auf seinen Maximalfüllstand bzw. Maximalpegel FM mit Wasser befüllt ist, d.h. das Füllvolumen des Wasserbehälters ist dann im Wesentlichen vollständig mit Wasser angefüllt. Erfindungsgemäß ist dabei vorgesehen, dass sich die mehreren Füllphasen FP1, FP2, FP3 akkumuliert betrachtet über einen wesentlichen Teil der Dauer ZTG des Trocknungsgangs TG erstrecken, wobei unter einem wesentlichen Teil wenigstens 10% verstanden wird. Vorteilhaft ist jedoch, wenn sich die mehreren Füllphasen insgesamt über wenigstens 20%, bevorzugt über wenigstens 40%, besonders bevorzugt über wenigstens 60%, und am meisten bevorzugt über wenigstens 80%, der Dauer ZTG des Trocknungsgangs TG erstrecken. Das Befüllen des Wasserbehälters 11 startet zu Beginn des Trocknungsgangs TG nach Abwarten einer anfänglichen Abtropfphase AP mit der ersten Teilfüllphase FP1, durch die der Wasserstand im Spülbehälter 11 erstmals vom Pegel 0% bis zum Pegel bzw. Teilfüllstand F1 mit einer Teilfüllmenge S1 teilbefüllt wird. Dieser Füllstand F1 liegt über dem Ausgangsfüllstand FA des Wasserbehälters 11 und hier soweit unterhalb des Maximalfüllstands FE, dass noch zwei etwa gleich große Teilfüllmengen S2, S3, die jeweils etwa der ersten Teilfüllmenge S1 entsprechen, bis zum Erreichen des Maximalfüllstands FE zufüllbar sind. Dieser ersten Füllphase FP1 folgen also in zeitlichen Abständen bzw. Pausen P1, P2 voneinander zwei weitere Teilfüllphasen FP2, FP3 nach, während denen jeweils dem Wasserbehälter 11 schrittweise in Stufen, d.h. portionsweise die Teilmengen S2, S3 mittels des Füllventils 12 zugeführt werden. Der Gesamtfüllvorgang endet mit dem endgültigen Erreichen des Endfüllstands FE des Wasserbehälters 11 nach dem dritten Zufüllen der Teilfüllmenge S3. Für diese stufenweise Befüllung des Wasserbehälters kann es ausreichend sein, wenn das Füllventil als Sperrventil ausgebildet ist, das lediglich einen Offenzustand und einen Geschlossenzustand aufweist.

Die zeitliche Streckung, d.h. die zeitliche Verteilung des Befüllens des Wasserbehälters 11 bewirkt eine Vergleichmäßigung der Kühlung der Kondensationsfläche 15, so dass die gewünschte Kondensation von Wasserdampf über einen längeren Zeitraum erreicht werden kann, ohne dass durch die durch dem mit Wasser befüllten Wasserbehälter bewirkte Kühlung der Kondensationsfläche 15 eine zu starke Abkühlung der Spülkammer 10 und damit des Spülguts bewirkt würde, was der Verdunstung der am Spülgut anhaftenden Spülflüssigkeit abträglich wäre, weil die im Spülgut während des vorausgehenden Klarspülgangs gespeicherte Eigenwärme zu stark entzogen werden und nicht mehr zur ausreichenden Verdunstung der Feuchte auf dem Spülgut ausreichen würde. Insgesamt kann so die Trocknungseffizienz verbessert werden.

Im Beispiel der Figur 3 wird die zeitliche Streckung des Befüllens des Wasserbehälters durch Aufteilen des Füllvorgangs während der Trocknungszeitdauer ZTG auf drei Teilfüllphasen FP1, FP2, FP3 bewirkt, während denen der Wasserbehälter 11 mehrstufig mit den Teilfüllmengen S1, S2, S3 in zeitlichen Abständen bzw. Pausen P1, P2 voneinander befüllt wird. Insgesamt sind also zwischen dem Ausgangsfüllstand FA und dem Endfüllzustand FE zwei Zwischenfüllstände F1, F2 vorgesehen. Es ergeben sich somit drei Befüllungsstufen SU1, SU2, SU3 durch dreimaliges Zufüllen von Teilfüllmengen S1, S2, S3, wobei hier im Ausführungsbeispiel ein konstanter zeitlicher Abstand zwischen je zwei benachbarten Stufen wie z.B. SU1/SU2 und SU2/SU3 vorgesehen ist. Nach Abschluss der ersten Füllstufe SU1 erreicht der Füllstand einen ersten Zwischenfüllstand F1, nach Abschluss der zweiten Stufe SU2 einen zweiten Zwischenfüllstand F2 und nach Abschluss der dritten Stufe SU3 den Endzustand FE. Es versteht sich von selbst, dass auch nur zwei Füllstufen oder aber auch weitere Stufen, insbesondere mehr als drei Füllstufen, in weiteren Teilfüllphasen vorgesehen sein könnten.

Im Beispiel dient die erste Stufe SU1 dazu, schon in einer frühen Phase des Trocknungsgangs TG eine Kühlung der Kondensationsfläche 15 zu bewirken, um so das Auskondensieren von Wasserdampf zu fördern. Da der erste Zwischenfüllstand F1 hier im Ausführungsbeispiel bei lediglich 40% des Maximalfüllstands FM liegt, wird die Spülkammer jedoch vergleichsweise wenig abgekühlt. Die zweite Stufe SU2 dient dem Ausgleich einer Abnahme der Kühlung, welche sich durch eine Erwärmung des in der ersten Stufe SU1 eingefüllten Wassers beim Fortschreiten des Trocknungsgangs ergibt. So kann durch die zweite Stufe SU2 die Temperatur des Wassers im Wasserbehälter 11 wieder gesenkt werden. Die dritte Stufe SU3 dient ebenfalls dem Ausgleich einer abnehmenden Kühlung. Sie kann aber alternativ oder zusätzlich hiervon auch ausschließlich dazu vorgesehen sein, den Wasserbehälter vollständig zu füllen, so dass in einem späteren Spülgang ein vollständig gefüllter Wasserbehälter 11 zur Verfügung steht. Die zeitliche Verteilung der Stufen SU1, SU2, SU3, der zwischen diesen liegenden Pausen bzw. Wartezeiten, während der kein Wasser dem Wasserbehälter 11 zugeführt wird, sowie die Teilfüllmengen S1, S2, S3 der Stufen SU1, SU2, SU3 können fest vorgegeben sein oder anhand der Signale des Sensors 34 gesteuert werden. Anstelle von etwa gleichen Teilfüllmengen, gleichen Teilfüllphasen bzw. Teilfüllzeitdauern, gleichen Pausenzeiten, kann es ggf. auch zweckmäßig sein, wenn von diesen Parametern ein oder mehrere variabel bzw. verschieden eingestellt werden. Dies kann insbesondere adaptiv durch die Ablaufsteuereinrichtung 20, ggf. unter Zuhilfenahme mindestens eines Sensors zur Bestimmung von ein oder mehreren die Kondensationswirkung beeinflussenden Faktoren bzw. Parametern, durchgeführt werden. Zum Abschluss des Trocknungsgangs TG wird die im Pumpentopf 17 gesammelte Restmenge der Spülflüssigkeit mittels der Laugenpumpe 31 abgepumpt, welche sich beispielsweise aus Tropfwasser und aus Kondenswasser zusammensetzen kann. Diese Abpumpphase ist in der Kurve Z31 als Einschaltzustand gekennzeichnet und mit LPE bezeichnet.

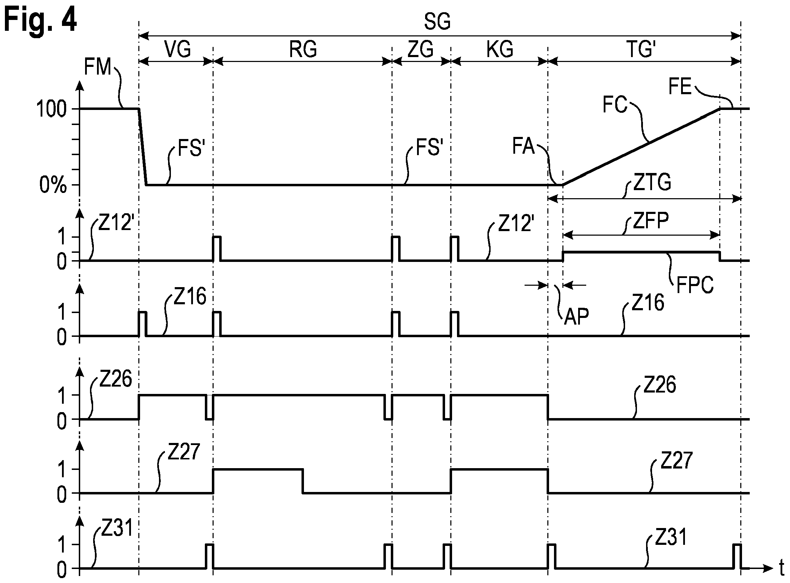

Figur 4 zeigt einen weiteren Ablauf eines Spülgangs SG, der einen gegenüber dem Spülgang SG der Figur 3 modifizierten Trocknungsgang TG' aufweist und nicht zur Erfindung gehört. Die Modifikation gegenüber dem zeitdiskreten, sukzessiven Teilzufüllen des Ausführungsbeispiels von Figur 3 besteht darin, dass nahezu über die gesamte Zeitdauer ZTG des Trocknungsgangs TG' eine einzige durchgehende Füllphase FPC mit einer kontinuierlichen bzw. fortlaufenden Befüllung des Wasserbehälters 11 während einer Befüllungszeitdauer ZFP vorgesehen ist. Diese startet nach der Abtropfphase AP und endet erst kurz vor Ende des Trocknungsvorgangs, wenn der Wasserbehälter seinen Maximalfüllstand FE erreicht hat. Um die zeitliche Streckung der Füllphase FPC zu erreichen, wird der Wasserbehälter 11 mit einer gegenüber den Teilfüllphasen FP1, FP2, FP3 wesentlich abgesenkten Füllgeschwindigkeit gefüllt. Diese Absenkung bzw. Drosselung der Füllgeschwindigkeit wird im Beispiel der Figur 4 dadurch erreicht, dass das Füllventil 12 nur teilweise geöffnet wird, was dargestellt ist, indem die Kurve Z12' für das Füllventil 12 während der Füllphase FPC einen Wert annimmt, der zwischen dem Wert "1" und dem Wert "0" liegt. Zweckmäßigerweise ist hierfür das Füllventil als Stellventil ausgebildet, dessen Durchtrittsquerschnitt oder allgemeiner ausgedrückt dessen Durchflussrate einstellbar ist. Insbesondere wird die kontinuierliche Befüllung des Wasserbehälters hier im Ausführungsbeispiel derart mittels des Füllventils durchgeführt, dass die Füllstandskurve FC für den Wasserpegel im Wasserbehälter zwischen dem Ausgangsfüllstand AC und dem Endfüllstand FE im Wesentlichen stetig, insbesondere weitgehend linear ansteigt. Eine geeignete Füllgeschwindigkeit könnte jedoch auch durch eine anderweitige Drosselung des zugeführten Wasserstroms herbeigeführt werden, beispielsweise durch eine Verringerung des Querschnitts der Verbindungsleitung 22, wobei zum Befüllen des Spülbehälters 11 mit von der Kaltwasserversorgung unmittelbar aufgenommenem Wasser, beispielsweise während des Reinigungsgangs RG, ein Bypass vorgesehen sein kann, um die Befüllung des Spülbehälters schnell durchführen zu können.

Nochmals anders ausgedrückt kann auf diese Weise insbesondere eine Geschirrspülmaschine mit einem als Wärmetauscher fungierenden Wasserbehälter bereitgestellt werden, bei der durch ein Füllen des Wärmetauschers erfindungsgemäß in mehreren Stufen oder alternativ dazu und nicht zur Erfindung gehörend weitgehend kontinuierlich über die gesamte Trocknungsdauer verteilt ein zu starkes Abkühlen des Innenraums des Spülbehälters verhindert und trotzdem eine ausreichend kühle Kondensationsfläche erzeugt werden kann. Es ergibt sich somit insbesondere eine Verbesserung der Trocknungsleistung durch optimierte Zeitpunkte der Wasserbehälter- bzw. Wärmetauscher-Füllschritte und somit ein optimiertes Abkühlverhalten des Innenraums des Spülbehälters. Optional kann der Trocknungsvorgang insbesondere temperaturabhängig und/oder beladungsabhängig (insbesondere von Beladungsmenge, Beladungsart) z.B. mittels Zuhilfenahme von ein oder mehreren Sensoren gesteuert werden. In vielen Fällen ist in vorteilhafter Weise eine Energieeinsparung durch Absenkung der Klarspültemperatur bei gleichwertiger Trocknungsleistung möglich.

In den in den Figuren 3 und 4 gezeigten Abläufen steigt der Füllstand FS, FS' des Wasserbehälters 11 während dessen jeweiligen Befüllens stetig, d.h. zu jedem Zeitpunkt steigt der Füllstand oder verharrt auf dem bisherigen Wert. Es können ggf. nach einer nicht zur Erfindung gehörende Variante aber auch Abläufe vorteilhaft sein, bei denen sich der Füllstand FS, FS' während der Gesamtzeitdauer der ein oder mehreren Füllphasen zeitweilig durch Öffnen des Ablassventils 16 verringert, um beispielsweise die Abkühlung der Spülkammer 10 zeitweilig zu verringern oder zu verzögern. Insbesondere kann anstelle dass eine Teilfüllmenge dem Wasserbehälter zugeführt wird, ggf. auch einmal oder mehrere Male eine Teilfüllmenge entnommen werden, indem das Ablassventil 16 des Wasserbehälters 11 jeweils zeitweilig geöffnet wird. Insbesondere kann die Zuführung einer Teilfüllmenge durch die Abführung einer Teilfüllmenge ersetzt sein. In der Figur 3 ist in der Zustandskurve Z16 des Ablassventils 16 im Zwischenzeitraum zwischen der ersten Teilfüllphase FP1 und der im zeitlichen Abstand P1 nachfolgenden zweiten Teilfüllphase FP2, die mittels des Füllventils 12 durchgeführt werden, eine solche Teilentleerungsphase des Wasserbehälters 11, die durch zwischenzeitliches Öffnen dessen Ablassventils 16 durchgeführt wird, strichpunktiert eingezeichnet und mit EP1 bezeichnet. Sie führt zum Absenken der Füllmenge im Wasserbehälter, was in der Füllstandskurve FS jedoch der zeichnerischen Übersichtlichkeit halber weggelassen ist.

Verallgemeinert betrachtet sind somit verteilt über die Zeitdauer des Trocknungsgangs betrachtet mehrere Teilfüllvorgänge des Wasserbehälters vorgesehen. Auf diese Weise kann die Kondensationsleistung der Kondensationsfläche an die jeweilig vorliegenden, ein oder mehreren Parameter beim Trocknungsgang angepasst werden, die Einfluss auf die Trocknungswirkung der Kondensationsfläche haben. Diese Parameter können beispielsweise die Zulauftemperatur des zulaufenden Kaltwassers, die Größe der Kondensationsfläche, die Temperatur des zu trocknenden Spülguts, die Temperatur im Spülbehälter, Materialeigenschaften von Wasserbehälter und/oder Spülbehälter und/oder, Zulaufleitungen, die Wassermenge auf dem Spülgut nach dem vorausgehenden flüssigkeitsführenden Spülgang, das Füllvolumen des Wasserbehälters und/oder des Spülbehälters, die Temperatur des dem Trocknungsgang vorausgehenden Klarspülgangs, .usw.... sein. Erfindungsgemäß erfolgt die Befüllung des Wasserbehälters portionsweise, d.h. durch sukzessive aufeinanderfolgende, zeitversetzte Teilfüllgänge. Auf diese Weise sind mehrere Freiheitsgrade bereitgestellt, mit denen eine verbesserte Einstellung der Kühlleistung des Wasserbehälters in Bezug auf die mit ihm in thermischen Kontakt stehende Kondensationsfläche spezifisch angepasst an die jeweilig vorliegenden Gegebenheiten, die z.B. durch das jeweilig gewählte Geschirrspülprogramm, den Konstruktionstyp der Geschirrspülmaschine, usw..... vorgegeben sind, ermöglicht ist. Die Kühlleistung des Wasserbehälters lässt sich also in flexibler Weise an unterschiedliche Betriebsparameter anpassen.

### Bezugszeichenliste

- 1: Geschirrspülmaschine
- 2: Spülbehälter
- 3: Gehäuse
- 4: erste Seitenwand
- 5: zweite Seitenwand
- 6: Rückwand
- 7: Deckenwand
- 8: Bodenwanne
- 9: Tür
- 10: Spülkammer
- 11: Wasserbehälter, Wärmetauscher
- 12: Füllventil
- 13: gehäusefester Zulaufanschluss
- 14: Zulaufschlauch
- 15: Kondensationsfläche
- 16: Ablassventil
- 17: Pumpentopf
- 18: gehäusefester Ablaufanschluss
- 19: Abwasserschlauch
- 20: Ablaufsteuereinrichtung
- 21: Bedienschnittstelle
- 22: Verbindungsleitung
- 23: Steuerleitung für Füllventil
- 24: Steuerleitung für Ablassventil
- 25: Ablauf
- 26: Umwälzpumpe
- 27: Heizeinrichtung
- 28: Sprüheinrichtung
- 29: Steuerleitung für Umwälzpumpe
- 30: Steuerleitung für Heizeinrichtung
- 31: Laugenpumpe, Abwasserpumpe
- 32: Verbindungsleitung
- 33: Steuerleitung für Laugenpumpe
- 34: Sensor
- 35: Signalleitung
- 36: Steuer- und Signalleitung

- A: Abwasserrohr
- WH: Wasserversorgung, Wasserhahn

- SG: Spülgang
- VG: Vorspülgang
- RG: Reinigungsgang
- ZG: Zwischenspülgang
- KG: Klarspülgang
- TG: Trocknungsgang

- FS, FS': Füllstand des Wasserbehälters
- Z12: Betriebszustand des Füllventils
- Z16: Betriebszustand des Ablassventils
- Z26: Betriebszustand der Umwälzpumpe
- Z27: Betriebszustand der Heizeinrichtung
- Z31: Betriebszustand der Laugenpumpe

- FP1, FP2, FP3: Teilfüllphasen
- P1, P2, P3: Pausen, Wartezeiten
- FA: Ausgangsfüllstand
- FE: Endfüllstand
- FM: Maximalfüllstand
- F1: erster Zwischenfüllstand
- F2: zweiter Zwischenfüllstand
- S1: erste Stufe bzw. erste Teilfüllmenge
- S2: zweite Stufe bzw. zweite Teilfüllmenge
- S3: dritte Stufe bzw. dritte Teilfüllmenge
- AP: Abtropfphase
- FC: kontinuierliche Füllkurve
- ZTG: Gesamtzeitdauer des Trocknungsgangs
- ZFP: kontinuierliche Füllphase

## Patentansprüche

1. Geschirrspülmaschine (1), insbesondere Haushaltsgeschirrspülmaschine, mit einem Spülbehälter (2) zur Aufnahme von Spülgut, mit wenigstens einem Wasserbehälter (11), der in wärmeleitendem Kontakt mit dem Spülbehälter (2) zur Bereitstellung wenigstens einer Kondensationsfläche (15) des Spülbehälters (2) während wenigstens eines Trocknungsgangs (TG) wenigstens eines Spülgangs (SG) dient, und mit einer Befüllvorrichtung (12) zum Befüllen des Wasserbehälters (11) mit Wasser, **dadurch gekennzeichnet,**
**dass** die Befüllvorrichtung (12) derart ausgebildet ist, dass der Wasserbehälter (11) verteilt über die Zeitdauer (ZTG) des jeweiligen Trocknungsgangs (TG) in mehreren Füllphasen (FP1, FP2, FP3) mit Wasser so befüllbar ist, dass die Befüllung des Wasserbehälters (11) über die Zeitdauer (ZTG) des jeweiligen Trocknungsgangs (TG) betrachtet während mehrerer zeitlich aufeinanderfolgender Füllphasen (FP1, FP2, FP3) schrittweise in mehreren Stufen (S1, S2, S3) erfolgt und akkumuliert über alle Füllphasen zusammen betrachtet der Füllstand des Wasserbehälters (11) während des Trocknungsgangs von einem Ausgangsfüllstand bis zu einem Endfüllstand immer mehr gesteigert ist.

2. Geschirrspülmaschine nach Anspruch 1, **dadurch gekennzeichnet, dass** die Befüllvorrichtung (12) durch eine Ablaufsteuereinrichtung (20) steuerbar ist, die zur Steuerung mindestens eines Spülgangs (SG) zum Reinigen von Spülgut dient.

3. Geschirrspülmaschine nach einem der vorstehenden Ansprüche, **dadurch gekennzeichnet, dass** sich die mehreren Füllphasen (FP1, FP2, FP3) insgesamt über wenigstens 20%, bevorzugt über wenigstens 40%, besonders bevorzugt über wenigstens 60%, und am meisten bevorzugt über wenigstens 80%, der Dauer des jeweiligen Trocknungsgangs (TG) erstrecken.

4. Geschirrspülmaschine nach einem der vorstehenden Ansprüche, **dadurch gekennzeichnet, dass** sich die mehreren Füllphasen (FP1, FP2, FP3) insgesamt über wenigstens 10 Minuten, bevorzugt über wenigstens 20 Minuten, besonders bevorzugt über wenigstens 30 Minuten, und am meisten bevorzugt über wenigstens 40 Minuten, erstrecken.

5. Geschirrspülmaschine nach einem der vorstehenden Ansprüche, **dadurch gekennzeichnet, dass** der Ausgangsfüllstand (FA) des Wasserbehälters (11) weniger als 10%, bevorzugt weniger als 5%, besonders bevorzugt weniger als 2%, eines konstruktiv bedingten Maximalfüllstands (FM) und/oder der Endfüllstand (FE) des Wasserbehälters (11) mehr als 90%, bevorzugt mehr als 95%, besonders bevorzugt mehr als 98%, des konstruktiv bedingten Maximalfüllstands (FM) beträgt.

6. Geschirrspülmaschine nach einem der vorstehenden Ansprüche, **dadurch gekennzeichnet, dass** das Steuern der Befüllvorrichtung (12) unter Berücksichtigung von Signalen wenigstens eines Sensors (34) erfolgt, der einen das Trocknen des Spülguts beeinflussenden Parameter erfasst.

7. Geschirrspülmaschine nach einem der vorstehenden Ansprüche, **dadurch gekennzeichnet, dass** ein Sensor (34) zur Messung einer Temperatur des in dem Wasserbehälter (11) befindlichen Wassers vorgesehen ist.

8. Geschirrspülmaschine nach einem der vorstehenden Ansprüche, **dadurch gekennzeichnet, dass** ein Sensor zur Messung einer Temperatur der Kondensationsfläche (15) vorgesehen ist.

9. Geschirrspülmaschine nach einem der vorstehenden Ansprüche, **dadurch gekennzeichnet, dass** ein Sensor zur Messung einer Lufttemperatur und/oder Luftfeuchtigkeit in dem Spülbehälter (2) vorgesehen ist.

10. Geschirrspülmaschine nach einem der vorstehenden Ansprüche, **dadurch gekennzeichnet, dass** ein Sensor zur Messung einer Menge, Masse und/oder einer Art des in dem Spülbehälter (2) befindlichen Spülguts vorgesehen ist.

11. Verfahren zur Durchführung wenigstens eines Spülgangs (SG) zum Reinigen von Spülgut im Spülbehälter (2) einer Geschirrspülmaschine (1), welche wenigstens einen Wasserbehälter (11), der in wärmeleitendem Kontakt mit dem Spülbehälter (2) zur Bereitstellung wenigstens einer Kondensationsfläche (15) des Spülbehälters (2) während wenigstens eines Trocknungsgangs (TG) des jeweiligen Spülgangs (SG) ist, und eine Befüllvorrichtung (12) zum Befüllen des Wasserbehälters (11) mit Wasser umfasst, wobei die Geschirrspülmaschine nach mindestens einem der vorhergehenden Ansprüche ausgebildet ist, **dadurch gekennzeichnet, dass** der Wasserbehälter (11) mittels der Befüllvorrichtung (12) verteilt über die Zeitdauer (ZTG) des jeweiligen Trocknungsgangs (TG) in mehreren Füllphasen (FP1, FP2, FP3) mit Wasser so befüllt wird, dass die Befüllung des Wasserbehälters (11) über die Zeitdauer (ZTG) des jeweiligen Trocknungsgangs (TG) betrachtet während mehrerer zeitlich aufeinanderfolgender Füllphasen (FP1, FP2, FP3) schrittweise in mehreren Stufen (S1, S2, S3) erfolgt und akkumuliert über alle Füllphasen zusammen betrachtet der Füllstand des Wasserbehälters (11) während des Trocknungsgangs von einem Ausgangsfüllstand bis zu einem Endfüllstand immer mehr gesteigert wird.

## Claims

1. Dishwasher (1), in particular household dishwasher, having a washing container (2) for receiving items to be washed, having at least one water tank (11) which, in heat-conducting contact with the washing container (2), serves to provide at least one condensation surface (15) of the washing container (2) during at least one drying cycle (TG) of at least one wash cycle (SG), and having a filling apparatus (12) for filling the water tank (11) with water,
**characterised in that**
the filling apparatus (12) is embodied such that the water tank (11) can be filled with water in a distributed manner during the period of time (ZTG) of the respective drying cycle (TG) in a number of filling phases (FP1, FP2, FP3) so that viewed during the period of time (ZTG) of the respective drying cycle (TG), the water tank (11) is filled gradually in a number of stages (S1, S2, S3) during a number of temporally consecutive filling phases (FP1, FP2, FP3) and considered accumulated together over all filling phases, during the drying cycle the fill level of the water tank (11) is increased more and more from an initial fill level to a final fill level.

2. Dishwasher according to claim 1, **characterised in that** the filling apparatus (12) can be controlled by a sequential controller (20), which is used to control at least one wash cycle (SG) for cleaning items to be washed.

3. Dishwasher according to one of the preceding claims, **characterised in that** the number of filling phases (FP1, FP2, FP3) extends overall beyond at least 20%, preferably beyond at least 40%, particularly preferably beyond at least 60%, and at most preferably beyond at least 80%, of the duration of the respective drying cycle (TG).

4. Dishwasher according to one of the preceding claims, **characterised in that** the number of filling phases (FP1, FP2, FP3) extends overall beyond at least 10 minutes, preferably beyond at least 20 minutes, particularly preferably beyond at least 30 minutes and at most preferably beyond at least 40 minutes.

5. Dishwasher according to one of the preceding claims, **characterised in that** the initial fill level (FA) of the water tank (11) is less than 10%, preferably less than 5%, particularly preferably less than 2%, of a structurally specific maximum fill level (FM) and/or the final fill level (FE) of the water tank (11) is more than 90%, preferably more than 95%, particularly preferably more than 98%, of the structurally specific maximum fill level (FM).

6. Dishwasher according to one of the preceding claims, **characterised in that** the control of the filling apparatus (12) is carried out by taking into consideration signals from at least one sensor (34), which record a parameter which influences the drying of the item to be washed.

7. Dishwasher according to one of the preceding claims, **characterised in that** a sensor (34) is provided for measuring a temperature of the water located in the water tank (11).

8. Dishwasher according to one of the preceding claims, **characterised in that** a sensor is provided for measuring a temperature of the condensation surface (15).

9. Dishwasher according to one of the preceding claims, **characterised in that** a sensor is provided for measuring an air temperature and/or air humidity in the washing container (2).

10. Dishwasher according to one of the preceding claims, **characterised in that** a sensor is provided for measuring a quantity, mass and/or a type of the item to be washed disposed in the washing container (2).

11. Method for carrying out at least one wash cycle (SG) for cleaning items to be washed in the washing container (2) of a dishwasher (1), which comprises at least one water tank (11), which is in heat-conducting contact with the washing container (2) for providing at least one condensation surface (15) of the washing container (2) during at least one drying cycle (TG) of the respective wash cycle (SG), and a filling apparatus (12) for filling the water tank (11) with water, wherein the dishwasher is embodied according to at least one of the preceding claims, **characterised in that** the filling apparatus (12) is used to fill the water tank (11) with water in a distributed manner during the period of time (ZTG) of the respective drying cycle (TG) in a number of filling phases (FP1, FP2, FP3) so that viewed during the period of time (ZTG) of the respective drying cycle (TG), the water tank (11) is filled gradually in a number of stages (S1, S2, S3) during a number of temporally consecutive filling phases (FP1, FP2, FP3) and considered accumulated together over all filling phases, during the drying cycle the fill level of the water tank (11) is increased more and more from an initial fill level to a final fill level.

## Revendications

1. Lave-vaisselle (1) en particulier lave-vaisselle électroménager, avec une cuve de lavage (2) pour la réception de vaisselle à nettoyer, avec au moins une cuve d'eau (11), laquelle sert, en contact conducteur de chaleur avec la cuve de lavage (2) à procurer au moins une surface de condensation (15) de la cuve de lavage (2) pendant au moins une opération de séchage (TG) d'au moins une opération de nettoyage (SG), et avec un dispositif de remplissage (12) pour le remplissage de la cuve d'eau (11) avec de l'eau,
**caractérisé en ce que**
le dispositif de remplissage (12) est configuré de telle sorte que la cuve d'eau (11) peut être remplie d'eau, pendant toute la durée (ZTG) de chaque opération de séchage (TG) en plusieurs phases de remplissage (FP1, FP2, FP3) de telle sorte que le remplissage de la cuve d'eau (11), considéré sur la durée (ZTG) de chaque opération de séchage (TG), s'effectue pendant plusieurs phases partielles de remplissage (FP1, FP2, FP3) successives dans le temps, progressivement en plusieurs étapes (S1, S2, S3) et que, considéré accumulé sur toutes les phases de remplissage, le niveau de remplissage de la cuve d'eau (11) est augmenté de plus en plus pendant l'opération de séchage, d'un niveau de remplissage initial à un niveau de remplissage final.

2. Lave-vaisselle selon la revendication 1, **caractérisé en ce que** le dispositif de remplissage (12) peut être commandé par un dispositif de commande de processus (20), lequel sert à commander au moins une opération de nettoyage (SG) pour le nettoyage de la vaisselle à nettoyer.

3. Lave-vaisselle selon l'une des revendications précédentes, **caractérisé en ce que** les plusieurs phases de remplissage (FP1, FP2, FP3) s'étendent en tout sur au moins 20%, de préférence sur au moins 40%, de manière particulièrement préférée sur au moins 60% et le plus préférablement sur au moins 80%, de la durée de chaque opération de séchage (TG).

4. Lave-vaisselle selon l'une des revendications précédentes, **caractérisé en ce que** les plusieurs phases de remplissage (FP1, FP2, FP3) s'étendent en tout sur au moins 10 minutes, de préférence sur au moins 20 minutes, de manière particulièrement préférée sur au moins 30 minutes, et de manière la plus préférée, sur au moins 40 minutes.

5. Lave-vaisselle selon l'une des revendications précédentes, **caractérisé en ce que** le niveau de remplissage initial (FA) de la cuve d'eau (11) est de moins de 10%, de préférence de moins de 5%, de manière particulièrement préférée de moins de 2%, d'un niveau de remplissage maximum (FM) défini à la construction, et/ou le niveau de remplissage final (FE) de la cuve d'eau (11) est de plus de 90%, de préférence de plus de 95%, de manière particulièrement préférée de plus de 98%, du niveau de remplissage maximum (FM) défini à la construction.

6. Lave-vaisselle selon l'une des revendications précédentes, **caractérisé en ce que** la commande du dispositif de remplissage (12) s'effectue en fonction de signaux d'au moins un capteur (34) qui saisit un paramètre influençant le séchage de la vaisselle à nettoyer.

7. Lave-vaisselle selon l'une des revendications précédentes, **caractérisé en ce qu'**il prévoit un capteur (34) destiné à la mesure de la température de l'eau se trouvant dans la cuve d'eau (11).

8. Lave-vaisselle selon l'une des revendications précédentes, **caractérisé en ce qu'**il prévoit un capteur (34) destiné à la mesure de la température de la surface de condensation (15).

9. Lave-vaisselle selon l'une des revendications précédentes, **caractérisé en ce qu'**il prévoit un capteur (34) destiné à la mesure de la température de l'air et/ou de l'humidité de l'air dans la cuve de lavage (2).

10. Lave-vaisselle selon l'une des revendications précédentes, **caractérisé en ce qu'**il prévoit un capteur destiné à la mesure d'une quantité, d'une masse et/ou d'un type de vaisselle à nettoyer se trouvant dans la cuve de lavage (2).

11. Procédé d'exécution d'au moins une opération de lavage (SG) destiné au nettoyage de vaisselle à nettoyer dans la cuve de lavage (2) d'un lave-vaisselle (1), lequel comprend au moins une cuve d'eau (11), laquelle est en contact conducteur de chaleur avec la cuve de lavage (2) pour procurer au moins une surface de condensation (15) de la cuve de lavage (2) pendant au moins une opération de séchage (TG) de chaque opération de lavage (SG), et un dispositif de remplissage (12) pour le remplissage de la cuve d'eau (11) avec de l'eau, dans lequel le lave-vaisselle est configuré selon au moins l'une des revendications précédentes, **caractérisé en ce que** la cuve d'eau (11) est remplie d'eau au moyen du dispositif de remplissage (12) pendant toute la durée (ZTG) de chaque opération de séchage (TG) en plusieurs phases de remplissage (FP1, FP2, FP3) de telle sorte que le remplissage de la cuve d'eau (11) s'effectue sur la durée (ZTG) de chaque opération de séchage (TG), considéré pendant plusieurs phases partielles de remplissage (FP1, FP2, FP3) successives dans le temps, progressivement en plusieurs étapes (S1, S2, S3) et que, considéré accumulé sur toutes les phases de remplissage, le niveau de remplissage de la cuve d'eau (11) est augmenté de plus en plus pendant l'opération de séchage, d'un niveau de remplissage initial à un niveau de remplissage final.
